# EUROPEAN PATENT APPLICATION

(11) **EP 4 546 576 A1**
(43) Date of publication of application: **30.04.2025**
(21) Application number: 24205562.2
(22) Date of filing: 09.10.2024
(51) Int. Cl.: H01R 13/627, B25J 15/00, H01R 13/631, H01R 43/26, H01R 13/52

(54) **ROBOTIC INTERFACE SYSTEM, DEVICES, AND METHOD FOR USE IN ENVIRONMENTS WITH DUST, ABRASIVE PARTICLES, OR FINE PARTICULATES**

(30) Priority: 12.10.2023 US 202363589761 P
(71) Applicant: MacDonald, Dettwiler and Associates Inc., Brampton, Ontario L6Y 6K7 (CA)
(72) Inventor: Sachdev, Tej Singh, Brampton, Ontario, L6Y 6K7 (CA); Gadhavi, Bhargav, Brampton, Ontario, L6Y 6K7 (CA); Bull, Darren, Brampton, Ontario, L6Y 6K7 (CA); Honeybrown, Mike, Brampton, Ontario, L6Y 6K7 (CA)
(74) Representative: Grünecker Patent- und Rechtsanwälte PartG mbB

(57) **Abstract**

A system and method for a dust tolerant robotic interface is provided herein. The system includes: an active side comprising an active side connector body and a passive side comprising a passive side connector body, wherein the active side connector body comprises an active latching feature, wherein the passive side connector body is configured to couple to the active side connector body, the passive side connector body comprising a passive latching feature configured to couple to the active latching feature; and a latching system coupled to the active side connector body, the latching system having a latched and unlatched configuration, the latching system configured to lock the active latching feature to the passive latching feature when the active side and passive side of the system are structurally latched, and the latching system is in the latched configuration.

## Description

### Technical Field

The following relates generally to robotic interfaces, and more particularly to robotic interfaces and methods that are tolerant to dust, abrasive particles, or fine particulates and suitable for use in lunar environments.

### Introduction

Robotic interfaces may be employed to connect two robotic components, or to connect a robotic component to an external object. In some cases, it may be additionally desirable to pass data and/or electrical power across the robotic interface.

In dusty environments, such as the lunar surface, environmental dust such as lunar regolith may interfere with such a robotic interface. Mechanical components that need to be physically mated may become contaminated with environmental dust, interfering with mechanical coupling. Additionally, electrical power and data transmission contacts may be blocked from conducting electrical power and/or signals, or may be otherwise interfered with, especially if environmental dust is conductive.

Accordingly, there is a need for an improved system and method for dust tolerant robotic interfaces and methods for use in lunar environments that overcomes at least some of the disadvantages of existing systems and methods.

### Summary

Described herein is a dust tolerant interface system, according to an embodiment. According to some embodiments, the system includes an active side comprising an active side connector body and a passive side comprising a passive side connector body, wherein the active side connector body comprises an active latching feature, wherein the passive side connector body is configured to couple to the active side connector body, the passive side connector body comprising a passive latching feature configured to couple to the active latching feature, and a latching system coupled to the active side connector body, the latching system having a latched and unlatched configuration, the latching system configured to lock the active latching feature to the passive latching feature when the active side and passive side of the system are structurally latched, and the latching system is in the latched configuration.

According to some embodiments, the latching system translates relative to the active side connector body when moving between the latched and unlatched configurations.

According to some embodiments, the latching system is translated between the latched and unlatched configurations by a drive system coupled to the latching system.

According to some embodiments, the drive system is sealed to prevent dust ingress.

According to some embodiments, the drive system is sealed with bellows.

According to some embodiments, the active latching feature comprises a compliant member.

According to some embodiments, the system comprises two active latching features and two passive latching features.

According to some embodiments, the system comprises an electrical interface configured to transmit electrical power between the active side connector body and the passive side connector body.

According to some embodiments, the electrical interface comprises an active side electrical interface, and passive side electrical interface, wherein the active side electrical interface is integral to the latching system.

According to some embodiments, the active side electrical interface comprises a dust tolerant electrical pin.

According to some embodiments, the active side electrical interface comprises a plurality of dust tolerant electrical pins.

According to some embodiments, the active side connector body includes an alignment cup, and the passive side connector body comprises an alignment cone, wherein the alignment cup and alignment cone comprise complimentary geometry and are configured to mate when the interface is structurally latched.

Described herein is an active side dust tolerant interface device, according to an embodiment. The device includes an active latching feature, and a latching system, wherein the active side dust tolerant interface device is configured to couple to a passive side interface device, wherein the passive side interface device comprises a connector body configured to couple to the active side connector body, the passive side connector body comprising a passive latching feature configured to couple to the active latching feature, and wherein the latching system is coupled to the active side connector body, the latching system having a latched and unlatched configuration, the latching system configured to lock the active latching feature to the passive latching feature when the active side and passive side of the system are structurally latched, and the latching system is in the latched configuration.

Described herein is a passive side dust tolerant interface device, according to an embodiment. The device includes a passive side connector body, wherein the connector body is configured to couple to an active side interface device having an active side connector body, the passive side connector body comprising a passive latching feature configured to couple to an active latching feature of the active side connector body, wherein a latching system is coupled to the active side connector body, the latching system having a latched and unlatched configuration, the latching system configured to lock the active latching feature to the passive latching feature when the active side and passive side of the system are structurally latched, and the latching system is in the latched configuration.

Described herein is a method of operating a dust tolerant interface system, according to an embodiment. The method includes providing an active side and a passive side dust tolerant interface device, the active side device comprising an active latching feature and latching system, and the passive side device comprising a passive latching feature, aligning the active side device with the passive side device, structurally latching the active side device to the passive side device, and moving the latching system from the unlatched configuration to the latched configuration, locking the active side device and passive side device to one another.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a schematic diagram of a dust tolerant robotic interface, according to an embodiment;
Figure 2 is a perspective view of an active side of a dust tolerant robotic interface and a passive side of the dust tolerant robotic interface, according to an embodiment;
Figure 3A is a cross sectional view of a dust tolerant robotic interface in a structurally latched and electrically connected state, according to an embodiment;
Figure 3B is a cross sectional view of the dust tolerant robotic interface of Figure 4A in a structurally latched but electrically disconnected state, according to an embodiment;
Figure 4 is a cross sectional view of a passive side of a dust tolerant robotic interface, according to an embodiment; and
Figure 5 is a flowchart of a method of mating the interface of Figures 2 to 4, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to a dust tolerant robotic system, and more particularly to a robotic interface having a passive side and active side that is tolerant to dust, abrasive particles, or fine particulates (and suitable for environments such as the lunar surface). The passive and active sides are configured to first couple to one another (structurally latch) using mechanical latches, then lock together by securing the mechanical latches using a latching system to lock the mechanical latches in this structurally latched position, mating the interface. When the interface is mated or structurally connected, electrical power and/or signals may be passed between the active side and passive side by conduction through an electrical interface that is connected after the structural latching process.

The interface is configured to be dust tolerant, having dust tolerant electrical pins, and mechanical properties the promote dust egress, and eliminate dust ingress to sensitive components, while maintaining mechanical simplicity, to improve reliability and reduce cost.

While the term "dust" is used herein, the interface may be generally tolerant to dust, abrasive particles, or other fine particulates (e.g., lunar regolith).

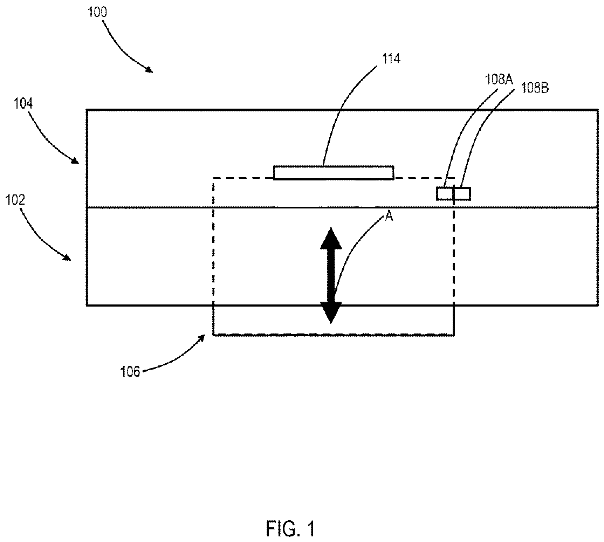

Referring now to Figure 1, pictured therein is a schematic block diagram of a dust tolerant robotic interface system 100, according to an embodiment.

System 100 comprises two halves, an active side 102, and a passive side 104. The active side 102 and passive side 104 are configured to securely mate and couple to one another, forming a mated interface.

Active side 102 comprises the half of system 100 including features which are mechanically actuated when mating active side 102 to passive side 104.

Passive side 104 comprises the half of system 100 to which active side 102 mates. Passive side 104 does not, or only minimally, changes in shape or conformation during the mating process, and instead, comprises passive electric and mechanical features to which active side 102 pairs.

System 100 includes latching feature 108. Latching features 108B and 108A(collectively referred to as latching feature 108) which span active side 102 and passive side 104 respectively. Latching feature 108B may be referred to as active latching feature and latching feature 108A may be referred to as passive latching feature 108A (or latch receiving feature). Latching feature 108 includes mechanical features allowing for active side 102 to mate to passive side 104. In the embodiment of Figure 1, latching feature 108 comprises a generally passive feature, such as a compliant mechanical snap. In other examples, latching feature 108 may comprise electrically actuated mechanical features. While one latching feature 108 is present in the embodiment of Figure 1, in other examples, a plurality of latching features 108 may be present.

System 100 includes latching system 106. Latching system 106 is an active system coupled to active side 102. Latching system 106 is configured to lock active side 102 to passive side 104 when latching system 106 is in a coupled configuration. Latching system 106 is configured to linearly translate along direction A relative to active side 102. Latching system 106 actuates motion of latching feature 108 to enable the latching process. Linear translation of latching system 106 actuates the motion of the latching feature 108 (which includes active and passive latching features) to lock the active half of the interface to the passive side of the interface. In other examples, latching system 106 may be configured to move in a different manner to lock active side 102 to passive side 104. In some examples, latching system 106 locks active side 10 2 to passive side 104 by locking latching features 108A and 108B.

Latching system 106 is configured to be dust tolerant, wherein moving components are sealed or shrouded from the external environment, preventing or eliminating dust ingress.

System 100 further includes electrical interface 114. Electrical interface 114 spans active side 102 and passive side 104. Electrical interface 114 includes electrically conductive contacts for transmitting electrical current to and/or from active side 102 and passive side 104. Electrical interface 114 may be further configured to transmit data. Electrical interface 114 may include redundant electrical connectors. Electrical interface 114 may include redundant electrical pins, to promote durability and system 100 performance in dusty environments wherein individual pins may be compromised.

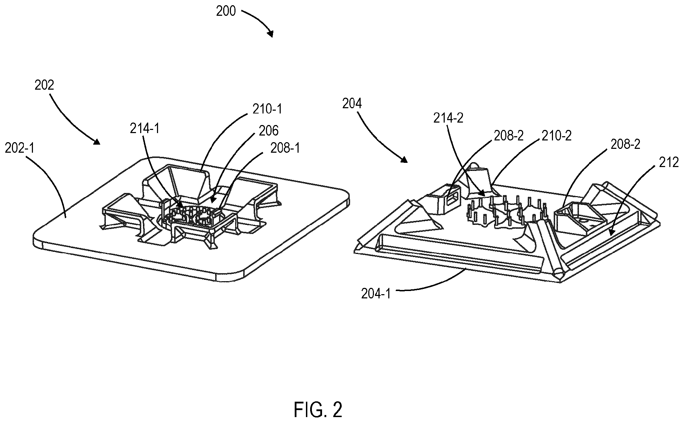

Referring now to Figure 2, pictured therein is a dust tolerant robotic interface system 200 including an active side 202 and a passive side 204, according to an embodiment. System 200 is a variant of system 100 of Figure 1. Components of system 200 are analogous to system 100, with reference characters incremented by 100.

Active side 202 comprises the portion of system 100 which locks active side 202 to passive side 204, when active side 202 and passive side 204 are coupled.

Active side 202 comprises two active latching features 208-1. Active latching features 208-1 are configured to mate with corresponding mechanical features on passive side 204, to structurally latch active side 202 to passive side 204.

Active side 202 includes active side body 202-1. Active side body 202-1 is the component providing active side 202 with its general mechanical structure. Active side body 202-1 may be constructed from machined aluminum, or any other mechanically suitable material. Active side body 202-1 may be referred to herein interchangeably as active side connector body 202-1.

Active side 202 further includes alignment cup 210-1. Alignment cup 210-1 includes a set of mechanical features configured to encourage active side 202 and passive side 204 to structurally latch and align when the two components are brought together. Alignment cup 210-1 is particularly configured to interact with mechanical features of passive side 204 to urge active side 202 and passive side 204 into alignment when the two components are brought close to one another. In an embodiment, the mechanical features of the passive side 204 include passive side alignment features including four pins at each corner of the passive side.

In the embodiment of Figure 2, alignment cup 210-1 is integral to active side body 202-1. In other embodiments, alignment cup 210-1 may be a separate component, affixed to active side body 202-1.

Active side 202 includes latching system 206. Latching system 206 is integrated into active side body 202-1. Latching system 206 is configured to lock active side 202 to passive side 204, when system 200 is structurally latched and aligned. Latching system 206 includes a moving assembly, which translates along a linear axis. Latching system 206 includes a latched configuration, which locks the active side 202 and passive side 204 together, and an unlatched configuration, which allows the active side 202 and passive side 204 to be separated.

Active side 202 further comprises active electrical interface 214-1. Electrical interface 214-1 mates with a corresponding electrical interface on passive side 204 to allow for electrical power, and/or, electrical data, to be passed between active side 202 and passive side 204. Electrical interface 214-1 comprises a plurality of conductive electrical pins configured to mate or otherwise with corresponding features of passive side 204 to transmit current between active side 202 and passive side 204. Conductive electrical pins of electrical interface 214-1 may be particularly configured to be dust tolerant. Electrical interface 214-1 may include redundant electrical pins to promote durability and system 200 performance in dusty environments wherein individual pins may be compromised. In some embodiments, system 200 may further comprise components that allow for wireless data and/or power transmission across the interface of system 200. For example, system 200 may allow for inductive power transmission and RF data transmission across the interface. In an embodiment, wireless data and/or power may be transferred across the latched interface.

Passive side 204 comprises two passive latching features 208-2. Passive latching features are configured to receive corresponding active latching features 208-1 of active side 202 to structurally latch and connect active side 202 to passive side 204.

Passive side 204 is constructed from passive side body 204-1. Passive side body 204-1 is the component providing passive side 204 with its general mechanical structure. Passive side body 204-1 may be constructed from machined aluminum, or any other mechanically suitable material. Passive side body 204-1 may be referred to herein interchangeably as passive side connector body 204-1.

Passive side 204 further includes alignment cone 210-2. Alignment cone 210-2 includes a set of mechanical features configured to encourage active side 202 and passive side 204 to align when the two components are brought together. Alignment cone 210-2 is particularly configured to interact with alignment cup 210-1 of active side 202 to urge active side 202 and passive side 204 into alignment when the two components are brought close to one another.

In the embodiment of Figure 2, alignment cone 210-2 is integral to passive side body 204-1. In other embodiments, alignment cone 210-2 may be a separate component, affixed to passive side body 204-1.

Passive side 204 further includes flange 212. Flange 212 may be used as a mounting point to integrate passive side 204 with another object to which the robotic interface coupled to active side 202 is intended to interact with. Flange 212 includes a generally flat surface, which may be used to conveniently mount passive side 204 to any object of interest.

Passive side 204 further includes active electrical interface 214-2. Electrical interface 214-2 mates with electrical interface 214-1 on active side 202 to allow for electrical power, and/or, electrical data, to be passed between active side 202 and passive side 204. Electrical interface 214-2 comprises a plurality of conductive electrical pins configured to mate or otherwise with corresponding electrical pins of electrical interface 214-1 to transmit current between active side 202 and passive side 204. Conductive electrical pins of electrical interface 214-2 may be particularly configured to be dust tolerant. Electrical interface 214-2 may include redundant electrical pins, to promote durability and system 200 performance in dusty environments wherein individual pins may be compromised.

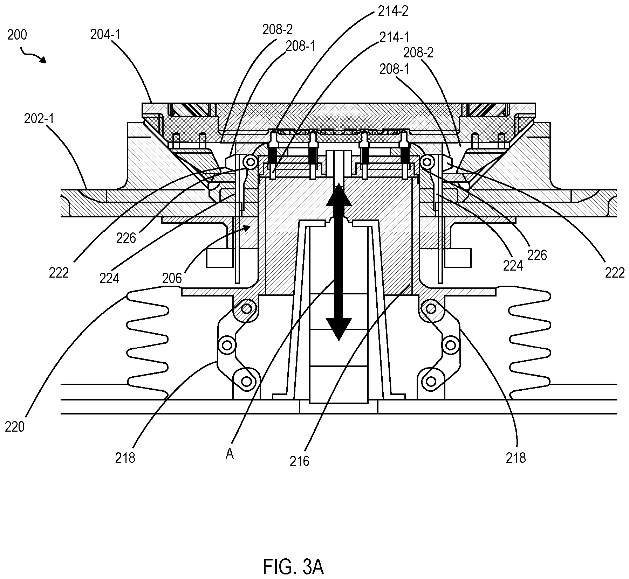

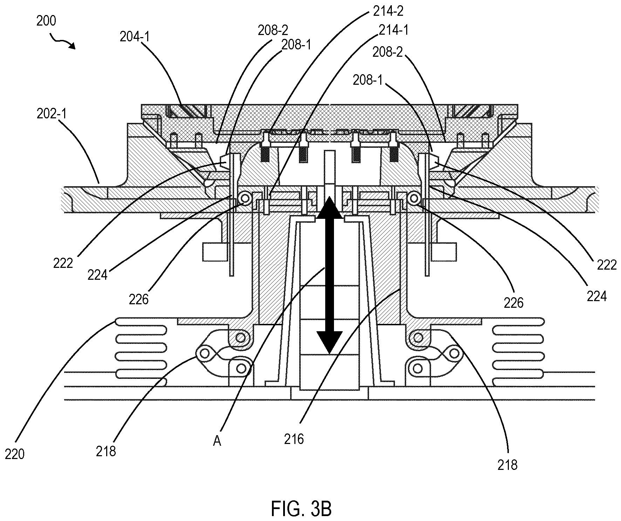

Referring now to Figures 3A and 3B, pictured therein are cross sectional views of the dust tolerant robotic interface system 200 of Figure 2, in a structurally latched and mated configuration (Figure 3A) and a structurally latched and unmated configuration (Figure 3B). Figure 3A is a structurally latched and electrically connected state. Figure 3B is a structurally latched but electrically disconnected state. Separation force may be same for both these states because interface stays structurally latched in both states.

"Structurally latched" as used in the present disclosure refers to a configuration in which passive and active latching features 208 are coupled, but the latching system 206 is not necessarily placed in the latched configuration. When structurally latched, system 200 is generally coupled, however, a smaller force is necessary to separate active side 202 from passive side 204 than when system 200 is mated.

"Mated" as used in the present disclosure refers to a configuration in which passive and active latching features 208 are coupled and latching system 206 is placed in the latched configuration, locking each passive and latching feature 208 to one another and locking active side 202 to passive side 204.

When system 200 is structurally latched but not mated, as shown in Figure 3B, active side 202 and passive side may be removed by applying a separation force. The separation force is any external force/moment on system 200 that can separate passive side 204 from active side 202.

Additionally, in the structurally latched but not mated condition, as shown in Figure 3B, the active side body 202-1 and passive side body 204-1 are in alignment such that electrical pins of electrical interface 214-1 and 214-2 are in a position wherein when the latching system is moved into the latched configuration, electrical pins of active side 202 and passive side 204 will mate.

When system 200 is mated, electricity and/or data may be transited between active side 202 and passive side 204, through the electrical interface 114. Additionally, as latching features 208-1 and 208-2 are locked with latching system 206, a significantly greater separation force is required to separate active side 202 and passive side 204 than when system 200 is in the structurally latched configuration.

As visible in Figures 3A and 3B, each active latching feature 208-1 is configured to couple with a passive latching feature 208-2 of passive side 204. Each active latching feature 208-1 comprises a compliant arm 224, and a latching wedge tip 222. The wedge tip 222 is fastened to the compliant arm (e.g., with screws) and does not move relative to the complaint arm 224.. Tip 222 comprises a general dual sided wedge shape and may be shaped to couple to a passive latching feature 208-1.

In other examples, active latching feature 208-1 may comprise a hinged arm and a roller tip, instead of a compliant arm. In some examples, such a hinged arm may be spring loaded, or mechanically biased in some manner.

Additionally visible in Figures 3A and 3B are components of latching system 206, including actuation rollers 226, latching system body 216, mechanical linkages 218, and a flexible linear seal 220. In an embodiment, the flexible linear seal 220 is a bellow or bellows. The flexible linear seal may be a flexible linear seal-sealed carriage (e.g., bellows-sealed carriage) that connects auxiliary functions that can be applied across the interface once connected. Auxiliary functions may include, for example, electrical data and/or power contacts, or mechanical torque.

Latching system body 216 comprises the main structure of latching system 206. Latching system body 216 is translated along direction A as latching system 206 is moved between the latched and unlatched configurations.

Latching system 206 is moved between the latched and unlatched configurations through the actuation of a drive system (not pictured), to which latching system 206 is coupled. The drive system may comprise a linear actuator, a rotary motor, or other form of drive system. In some examples, the drive system may comprise a spindle drive. In a particular embodiment, the drive system is a spindle drive which linearly moves latching system body 216 up for performing latching. As latching system body 216 moves up, its actuation roller 226 rides on a tapered ramp of compliant arm 224, which stretches/swings the arm 224 such that the wedge tip 222 sits inside its matching cavity in passive latching feature 208-2. This part completes latching. Further vertical motion of latching system body 216, causes actuation rollers 226 to ride on a straight vertical ramp of compliant arm 224, which completes electrical connection of the interface 114.

Locking features 226 are coupled to latching system body 216, such that locking features 226 translate along with latching system body 216 when latching system 206 is moved between the latched and unlatched configurations.

When latching system 206 is placed in the latched configuration, locking features 226 are positioned behind tip 222, preventing tip 222 from being horizontally moved, and therefore, locking active latching features 208-1 to passive latching features 208-2, as these latching features may not be separated when locking feature 226 is adjacent to tip 222, as pictured in Figure 3A.

Mechanical linkages 218 comprise the internal mechanism of latching system 206, allowing for the latching system 206 to be translated. Mechanical linkages 218 comprise multi-bar mechanical linkages configured to provide for a translating movement. Mechanical linkages 218 are constructed from a metallic material, however, in other embodiments, mechanical linkages 218 may be constructed from other materials.

Bellows 220 are present around internal mechanical components of latching system 206, preventing internal mechanical components (e.g., mechanisms, drive system and other sensitive electromechanical components) from dust damage by preventing dust ingress. In the present embodiment, bellows 220 may be constructed from a woven cloth material, however, in other embodiments, bellows 220 may be constructed from another material, such as a non-woven polymer material. While in the present embodiment, bellows 220 comprise a specific configuration, in other embodiments, another flexible linear seal may be present instead.

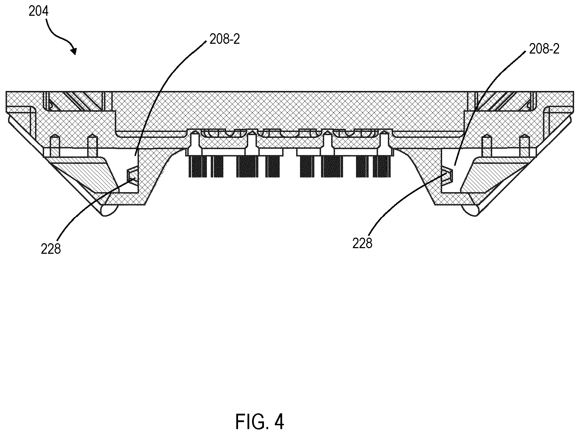

Referring now to Figure 4, pictured therein is a detailed cross section of passive side 204 of dust tolerant robotic interface system 200. Visible in Figure 4 is passive latching recess 228. Passive latching recess 228 comprises a generally wedge-shaped recess having wedged or angled surfaces on both side of the recess 228. Latching recess 228 generally aligns in shape with tip 222 such that tip 222 conforms to latching recess 228.

In operation, system 200 may be installed across two objects. For example, passive side 204 may be coupled to a payload object and active side 202 may be coupled to a robotic arm. In such a configuration, system 200 may be used to couple the payload object to the robotic arm.

Active side 202 and passive side 204 may begin at a particular separated distance and may be arbitrarily misaligned. Active side 202 may be manipulated by the robotic arm to which it is coupled, to bring active side 202 towards passive side 204, until active side 202 and passive side are separated by a distance wherein alignment cup 210-1 and alignment cone 210-2 may interact. Alignment cup 210-1 and alignment cone 210-2 engage, urging active side 202 and passive side 204 into relative alignment as active side 202 and passive side 204 are brought closer together.

At a certain separation distance, active side 202 and passive side 204 begin to structurally latch, wherein active latching features 208-1 (e.g., compliant arms 224) begin to deflect, and each tip 222 engages with latch recess 228. Once engaged, compliant arms 224 return to a neutral, undeflected position, and active side 202 and passive side 204 are structurally latched, as shown in Figure 3B.

Once structurally latched, system 200 is aligned, such that latching system 206 may be moved into the latched configuration, translating latching system 206 until electrical interfaces 214-1, 214-2 become mated, as shown in Figure 3A, allowing for electrical conduction across passive side 204 and active side 202, permitting data and electrical power transmission.

Additionally, when latching system 206 is moved into the latched configuration, locking features 226 are moved into a position, wherein the locking features mechanically interfere with the removal of active latching features 208-1 from passive latching features 208-2, locking the active side 202 and passive side 204.

This operation may be conducted in reverse, moving the latching system 206 into the unlatched configuration, such that active latching features 208-1 may be separated from passive latching features 208-2, and active side 202 and passive side 204 may be separated by applying a separation force to active side 202 and/or passive side 204.

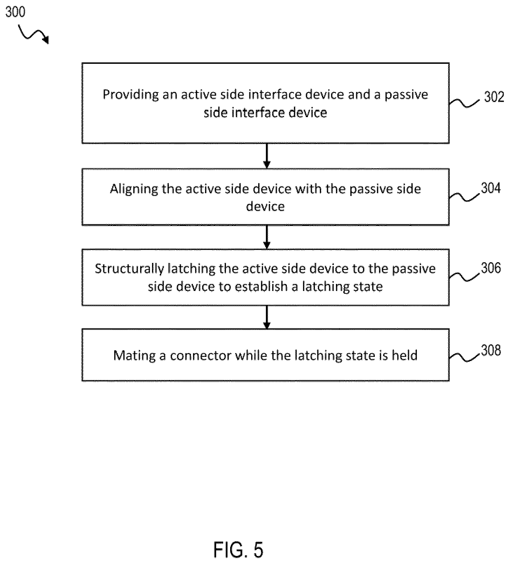

Referring now to Figure 5, pictured therein is a flow chart depicting a method 300 of operating the systems of Figures 1-4, according to an embodiment. The description above in reference to systems 100 and 200 may similarly apply to method 300. Method 300 includes 302, 304, 306 and 308.

At 302, the method 300 includes providing an active side interface device and passive side interface device.

At 304, the method 300 includes aligning the active side device with the passive side device.

At 306, the method 300 includes latching the active side device to the passive side device to establish a structurally latched state.

At 308, the method 300 includes mating a connector while the latching state is held. The latching system is moved from the unlatched configuration to the latched configuration, placing the system in a latched configuration, locking the active side device to the passive side device.

While method 300 is described in a certain order, method 300 may be conducted in reverse to un mate active side and passive side devices.

While the above description provides examples of one or more apparatus, methods, or systems, it will be appreciated that other apparatus, methods, or systems may be within the scope of the claims as interpreted by one of skill in the art.

## Claims

1. A dust tolerant interface system, comprising:
an active side comprising an active side connector body and a passive side comprising a passive side connector body;
wherein the active side connector body comprises an active latching feature;
wherein the passive side connector body is configured to couple to the active side connector body, the passive side connector body comprising a passive latching feature configured to couple to the active latching feature; and
a latching system coupled to the active side connector body, the latching system having a latched and unlatched configuration, the latching system configured to lock the active latching feature to the passive latching feature when the active side and passive side of the system are structurally latched, and the latching system is in the latched configuration.

2. The system of claim 1, wherein the latching system translates relative to the active side connector body when moving between the latched and unlatched configurations.

3. The system of 2, wherein the latching system is translated between the latched and unlatched configurations by a drive system coupled to the latching system.

4. The system of claim 3, wherein the drive system is sealed to prevent dust ingress.

5. The system of claim 4, wherein the drive system is sealed with bellows.

6. The system of any one of claims 1 to 5, wherein the active latching feature comprises a compliant member.

7. The system of any one of claims 1 to 6, wherein the system comprises two active latching features and two passive latching features.

8. The system of any one of claims 1 to 7, wherein the system comprises an electrical interface configured to transmit electrical power between the active side connector body and the passive side connector body.

9. The system of claim 8, wherein the electrical interface comprises an active side electrical interface, and passive side electrical interface, wherein the active side electrical interface is integral to the latching system.

10. The system of claim 9, wherein the active side electrical interface comprises a dust tolerant electrical pin.

11. The system of claim 9, wherein the active side electrical interface comprises a plurality of dust tolerant electrical pins.

12. The system of any one of claims 1 to 11, wherein the active side connector body comprises an alignment cup, and the passive side connector body comprises an alignment cone, wherein the alignment cup and alignment cone comprise complimentary geometry and are configured to mate when the interface is structurally latched.

13. An active side dust tolerant interface device, the device comprising an active latching feature, and a latching system;
wherein the active side dust tolerant interface device is configured to couple to a passive side interface device;
wherein the passive side interface device comprises a connector body configured to couple to the active side connector body, the passive side connector body comprising a passive latching feature configured to couple to the active latching feature; and
wherein the latching system is coupled to the active side connector body, the latching system having a latched and unlatched configuration, the latching system configured to lock the active latching feature to the passive latching feature when the active side and passive side of the system are structurally latched, and the latching system is in the latched configuration.

14. A passive side dust tolerant interface device, the device comprising a passive side connector body, wherein the connector body is configured to couple to an active side interface device having an active side connector body, the passive side connector body comprising a passive latching feature configured to couple to an active latching feature of the active side connector body;
wherein a latching system is coupled to the active side connector body, the latching system having a latched and unlatched configuration, the latching system configured to lock the active latching feature to the passive latching feature when the active side and passive side of the system are structurally latched, and the latching system is in the latched configuration.

15. A method of operating a dust tolerant interface system, the method comprising:
providing an active side and a passive side dust tolerant interface device;
the active side device comprising an active latching feature and latching system; and
the passive side device comprising a passive latching feature;
aligning the active side device with the passive side device;
structurally latching the active side device to the passive side device; and
moving the latching system from the unlatched configuration to the latched configuration, locking the active side device and passive side device to one another.
